Europäisches Patentamt

European Patent Office

Office européen des brevets

(19)

(11) Veröffentlichungsnummer: **0 084 629**
**B2**

(12) **NEUE EUROPÄISCHE PATENTSCHRIFT**

(45) Veröffentlichungstag der neuen Patentschrift:
04.07.90

(51) Int. Cl.⁵: **B 60 R 13/04**

(21) Anmeldenummer: **82111109.3**

(22) Anmeldetag: **01.12.82**

(54) **Stossleiste für Kraftfahrzeugkarosserien.**

(30) Priorität: **24.12.81 DE 3151520**

(43) Veröffentlichungstag der Anmeldung:
**03.08.83 Patentblatt 83/31**

(45) Bekanntmachung des Hinweises auf die
Patenterteilung:
**18.09.85 Patenblatt 85/38**

(45) Bekanntmachung des Hinweises auf die
Entscheidung u¨ber den Einspruch:
**04.07.90 Patentblatt 90/27**

(84) Benannte Vertragsstaaten:
**DE FR GB**

(56) Entgegenhaltungen:
DE-A-2 216 958
DE-A-2 650 096
DE-A-2 754 867
DE-A-2 910 320
DE-A-2 912 625
DE-A-3 010 911
DE-A-3 125 808
DE-U-7 210 691
DE-U-7 902 424

Werkstoff-Führer Kunststoffe: Eigenschaften,
Prüfung, Kennwerte... Carl Hanser Verlag S.
216-219.

(73) Patentinhaber: **PEBRA GmbH Paul Braun**
**Martinstr. 34**
**D-7300 Esslingen (DE)**

(72) Erfinder: **Fritsch, Walter**
**Diepoldstrasse 2**
**D-7300 Esslingen-Zell (DE)**

(74) Vertreter: **Patentanwälte Dr. Ing. Eugen Maier**
**Dr. Ing. Eckhard Wolf**
**Eugensplatz 5 Postfach 13 10 01**
**D-7000 Stuttgart 1 (DE)**

(56) Entgegenhaltungen:

**Sonderdruck aus "Gummi Asbest Kunststoffe"**
**21. Jahrgang Heft 9 A.W. Gentner Verlag,**
**Stuttgart**

**SChweizer Maschinenmarkt 9403 Goldbach Nr.**
**37/1969 S. 139-153**

**PV (26) 1975/12 "Glasfaser verstärktes**
**Polyäthylen S. 697-702**

EP 0 084 629 B2

**Beschreibung**

Die Erfindung betrifft eine Stoßleiste für Kraftfahrzeugkarosserien der im Oberbegriff des Anspruchs 1 angegebenen Gattung.

Es ist eine Stoßleiste dieser Art bekannt (DE—U—7 902 424), die einen Stoßteil aus relativ weichem Kunststoffmaterial sowie mindestens einen mit dem Stoßteil verbundenen Versteifungsteil aus einem relativ harten Kunststoffmaterial aufweist. Einem breiten Einsatz derartiger Stoßleisten vor allem bei hochwertigen Erstausstattungen stand bisher der hohe lineare thermische Ausdehnungskoeffizient der üblichen thermoplastischen Kunststoffmaterialien von mehr als $120 \times 10^{-6}$ $K^{-1}$ entgegen, der bei den im Freien üblicherweise auftretenden Temperaturdifferenzen je nach Länge der Leiste eine Längenveränderung gegenüber dem Karosserieblech bis zu 1 cm und mehr verursachen kann.

Der Erfindung liegt daher die Aufgabe zugrunde, eine Stoßleiste aus Kunststoff zu schaffen, die trotz des hohen Ausdehnungskoeffizienten der verwendeten Kunststoffmaterialien einen geringen effektiven linearen Ausdehnungskoeffizienten aufweist.

Zur Lösung dieser Aufgabe wird die im Anspruch 1 angegebene Merkmalskombination vorgeschlagen. Weitere vorteilhafte Ausgestaltungen der Erfindung ergeben sich aus den Unteransprüchen.

Das erfindungsgemäße Versteifungsteil aus thermoplastischem Kunststoff hat neben der versteifenden Funktion die zusätzliche Aufgabe, die Ausdehnung der Stoßleiste bei Temperaturänderungen klein zu halten. Zu diesem Zweck ist dem thermoplastischen Kunststoff eine Füllmasse mit geringem thermischen Ausdehnungsvermögen in einer solchen Menge und/oder Ausrichtung beigemischt, daß der effektive lineare thermische Ausdehnungskoeffizient des Versteifungsteils in Längsrichtung der Stoßleiste weniger als $50 \times 10^{-6}$ $K^{-1}$, vorzugsweise weniger als $40 \times 10^{-6}$ $K^{-1}$ beträgt.

Als Füllmasse werden bevorzugt Glas- oder Glasfaserteile in einer Menge von 10 bis 30 Gewichtsprozent dem thermoplastischen Kunststoff zugesetzt. Als Füllmasse kommen außedem Kreide- oder Talkteile sowie Textilfasern, Kohlenstoffasern oder Asbest in Betracht.

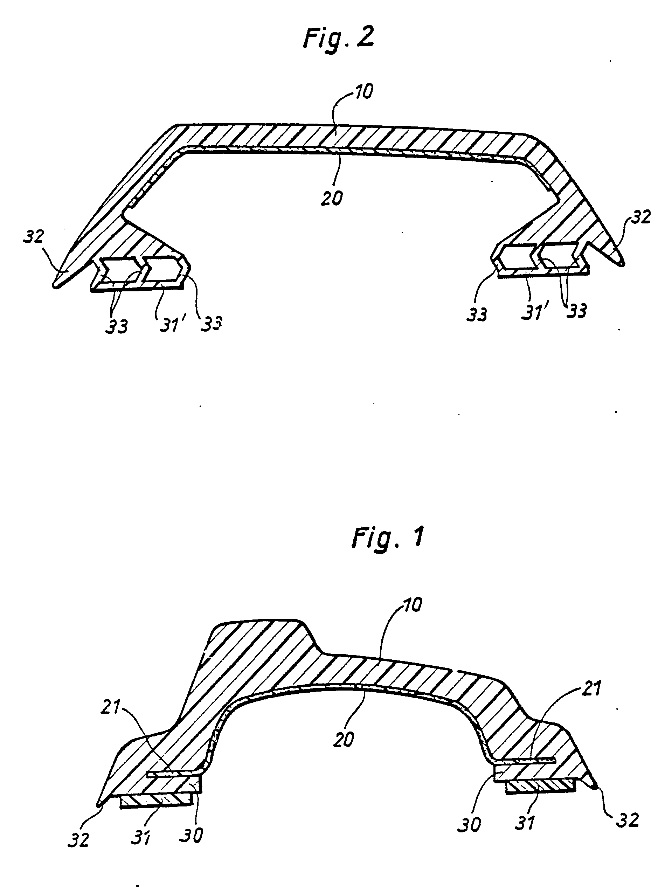

Im folgenden wird die Erfindung anhand der Zeichnung näher erläutert. In den Figuren 1 und 2 sind zwei bevorzugte Ausführungsbeispiele von Stoßleisten für Kraftfahrzeugkarosserien in einer schmatischen Querschnittsdarstellung abgebildet.

Die Stoßleiste besteht aus einem elastisch nachgiebigen Stoßteil 10 und einem mit diesem verbundenen, gegebenenfalls in diesen teilweise oder ganz eingebetteten formstabilen Versteifungsteil 20. Das Versteifungsteil 20 besitzt eine nach außen konvex gekrümmte dünnwandige, schalenförmige Gestalt. Im Falle des in Figur 1 gezeigten Ausführungsbeispiels weist es im Bereich des Leistenfußes 30 nach außen gebogene, in das Stoßteil 10 eingebettete Seitenränder 21 auf.

Im Bereich der Fußflächen ist das Stoßteil mit einer nachgiebigen Struktur 31, 31' versehen, die an ihrer Außenfläche einen Klebstoff, beispielsweise einen Haftkleber, trägt. Zum Befestigen an einer Kraftfahrzeugkarosserie muß die Stoßleiste somit lediglich mit der Klebstoffseite gegen die Karosserieoberfläche gedrückt werden. Etwaige Unebenheiten an der Karosserieoberfläche werden durch die nachgiebige Struktur 31, 31' ausgeglichen. Im montierten Zustand wird die nachgiebige Struktur nach außen hin durch an den Seitenrändern angeformte Lippen 32 verdeckt.

Bei dem in Figur 1 gezeigten Ausführungsbeispiel ist die nachgiebige Struktur 31 als dauerhaft mit dem Stoßteil verbundene Schaumstruktur ausgebildet, während im Falle der Figur 2 ein dünnwandiges Hohlprofilstück 31' mit gegenüber der Außenfläche spitz- und/oder stumpfwinkelig abgeknickten Zwischen- und Außenwänden 33 am Stoßteil 10 angeformt ist.

Das Stoßteil 10 besteht aus einem weich oder halbhart eingestellten Kunststoff, wie Polyurethan, einem Weich-PVC oder einem weichen oder halbharten Mischpolymerisat. Da diese Kunststoffe einen relativ hohen thermischen Ausdehnungskoeffizienten besitzen, hat das Versteifungsteil 20 neben der versteifenden Funktion die zusätzliche Aufgabe, die Ausdehnung der Stoßleiste bei Temperaturänderungen klein zu halten. Zu diesem Zweck besteht das Versteifungsteil 20 aus einem thermoplastischen Kunststoff, dem eine Füllmasse mit geringem thermischem Ausdehnungsvermögen in einer solchen Menge und/oder Ausrichtung beigemischt ist, daß der lineare thermische Ausdehnungskoeffizient des Versteifungsteils in Längsrichtung der Stoßleiste insgesamt weniger als $50 \times 10^{-6}$ $K^{-1}$, vorzugsweise weniger als $40 \times 10^{-6}$ $K^{-1}$ beträgt. Als Füllmasse werden bevorzugt Glas- oder Glasfaserteile in einer Menge von 10 bis 30 Gewichtsprozent dem thermoplastischen Kunststoff zugesetzt. Weiter kommen Kreide- oder Talkteile sowie Textilfasern, Kohlenstoffasern oder Asbest, gleichfalls in einer Menge von 10 bis 30 Gewichtsprozent, als Füllmasse in Betracht. Als thermoplastischer Kunststoff werden für das Versteifungsteil 20 bevorzugt Polyamid, Polypropylen, Hart-PVC, Polyurethan oder Polyäthylen verwendet.

Die Herstellung der Stoßleiste kann als Formteil oder als Profilteil in einer Folge- oder einer kombinierten Fertigung erfolgen. Das Versteifungsteil 20 kann dabei als Spritzteil, Ziehteil, Vakuumformteil, Blasteil, Schaumteil oder als aus Platten oder Streifen verformtes Teil hergestellt werden, während das Stoßteil 10 auf das Versteifungsteil 20 aufgespritz, aufgeschäumt oder aufgeklebt werden kann. Bei einer kombinierten Fertigung können das Versteifungsteil 20 und das Stoßteil 10 in einer Koextrusion, in einer Extrusion mit Verklebung im Durchlauf oder in der Verkettung von Vakuumverformung und Schäumung hergestellt und zugleich miteinander verbunden werden.

# EP 0 084 629 B2

**Patentansprüche**

1. Stoßleiste für Kraftfahrzeugkarosserien mit einem aus einem weiche oder halbhart eingestellten Kunststoffmaterial bestehenden Stoßteil (10) und einem mit dem Stoßteil verbundenen, gegebenenfalls teilweise oder ganz in diesen eingebetteten formstabilen Versteifungsteil (20) aus einem thermoplastischen Kunststoff und mit einem über eine nachgiebige Struktur (31, 31') auf der Stoßleiste angeordneten Klebstoff oder Haftkleber zur Befestigung der Stoßleiste an der Karosserie, dadurch gekennzeichnet, daß dem Kunststoff des Versteifungsteils (20) eine Füllmasse mit geringem thermischen Ausdennungsvermögen, bestehend aus Glasteilchen, Glasfasern, Kreideteilchen, Kaikteilchen, Textilfasern, Kohlenstoffasern, Aramidfasern oder Asbest in einer solchen Menge zwischen 10 und 30 Gewichtsprozent und/oder einer solchen Ausrichtung beigemischt ist, daß der lineare thermische Ausdehnungskoeffizient des Versteifungsteils in Längsrichtung der Stoßleiste insgesamt weniger als $50 \times 10^{-6}$ K$^{-1}$ beträgt, und daß der Klebstoff oder Haftkleber an einer Außenfläche des das Stoßteil (10) bildenden Kunststoffmaterials angeordnet ist.

2. Stoßleiste nach Anspruch 1, dadurch gekennzeichnet, daß der lineare thermische Ausdehnungskoeffizient des Versteifungsteils (20) weniger als $40 \times 10^{-6}$ K$^{-1}$ beträgt.

3. Stoßleiste nach Anspruch 1 oder 2, dadurch gekennzeichnet, daß das Versteifungsteil (20) Polyamid, Polypropylen, Hart-PVC, Polyurethan oder Polyäthylen als thermoplastischen Kunststoff enthält.

4. Stoßleiste nach einem der Ansprüche 1 bis 3, dadurch gekennzeichnet, daß das Stoßteil (10) aus Polyurethan, einem Weich-PVC oder einem weichen oder halbharten Mischpolymerisat besteht.

5. Stoßleiste nach einem der Ansprüche 1 bis 4, dadurch gekennzeichnet, daß das Versteifungsteil (20) als Spritzteil, Ziehteil, Vakuumformteil, Blasteil, Schaumteil oder als aus Platten oder Streifen verformtes Teil ausgebildet ist und daß das Stoßteil (10) auf das Versteifungsteil (20) aufgespritzt, aufgeschäumt oder aufgeklebt ist.

6. Stoßleiste nach einem der Ansprüche 1 bis 5, dadurch gekennzeichnet, daß das Versteifungsteil (20) und das Stoßteil (10) als im Koextrusionsverfahren hergestellte und miteinander verbundene Teile ausgebildet sind.

7. Stoßleiste nach einem der Ansprüche 1 bis 6, dadurch gekennzeichnet, daß das Versteifungsteil (20) eine dünnwandige, nach außen konvex gekrümmte schalenförmige Gestalt aufweist.

8. Stoßleiste nach einem der Ansprüche 1 bis 7, dadurch gekennzeichnet, daß an den einen Leistenfuß (30) bildenden Randbereichen des Stoßteils (10) ein dünnwandiges nachgiebiges Hohlprofil (31') mit einer ebenen, mit einem Klebstoff versehbaren oder versehenen Außenfläche angeformt ist.

9. Stoßleiste nach Anspruch 8, dadurch gekennzeichnet, daß das Hohlprofil (31') durch dünnwandige, gegenüber der den Klebstoff tragenden Außenfläche spitz- und/oder stumpfwinklig abgeknickte Zwischen- und Außenwände (33) begrenzt ist.

10. Stoßleiste nach einem der Ansprüche 1 bis 9, dadurch gekennzeichnet, daß das Versteifungsteil (20) in dem einen Leistenfuß (30) bildenden Randbereich nach außen gebogene, in das Stoßteil eingebettete Seitenränder (21) aufweist.

**Revendications**

1. Bande de protection pour carrosseries de véhicules automobiles, comprenant une zone d'impact (10) consistant en une matière plastique tendre ou semi-dure, une zone de rigidification (20) de forme stable, qui consiste en une matière thermoplastique et est reliée à la zone d'impact en étant éventuellement noyée en partie ou intégralement dans cette dernière, ainsi qu'un adhésif ou auto-adhésif pour la fixation de la bande de protection à la carrosserie, placé sur la bande de protection par l'intermédiaire d'une structure souple (31, 31'), caractérisée par le fait qu'une masse de remplissage à faible pouvoir de dilatation thermique, consistant en des particules de verre, des fibres de verre, des particules de craie, des particules de chaux, des fibres textiles, des fibres de carbone, des fibres d'aramide ou en de l'amiante, est ajoutée à la matière plastique constituant la zone de rigidification (20), selon une quantité comprise entre 10 et 30 pour cent en poids et/ou un agencement tels que le coefficient de dilatation thermique linéaire de cette zone de rigidification soit globalement inférieur à $50 \times 10^{-6}$ K$^{-1}$ dans le sens longitudinal de la bande de protection, et par le fait que l'adhésif ou l'auto-adhésif est placé sur une face externe de la matière plastique qui forme la zone d'impact (10).

2. Bande de protection selon la revendication 1, caractérisée par le fait que le coefficient de dilatation thermique linéaire de la zone de rigidification (20) est inférieur à $40 \times 10^{-6}$ K$^{-1}$.

3. Bande de protection selon la revendication 1 ou 2, caractérisée par le fait que la zone de rigidification (20) renferme, en tant que matière thermoplastique, un polyamide, du polypropylène, du PVC dur, du polyuréthane ou du polyéthylène.

4. Bande de protection selon l'une des revendications 1 à 3, caractérisée par le fait que la zone d'impact (10) consiste en du polyuréthane, en un PVC tendre ou en un copolymère tendre ou semi-dur.

5. Bande de protection selon l'une des revendications 1 à 4, caractérisée par le fait que la zone de rigidification (20) est réalisée sous la forme d'une pièce venue d'injection, d'une pièce venue d'étirage, d'une pièce venue de moulage par le vide, d'une pièce venue de soufflage, d'une pièce venue de moussage ou en tant que pièce en plaques ou en bandes déformée; et par le fait que la zone d'impact (10) est rapportée sur la zone de rigidification (20) par injection, moussage ou collage.

6. Bande de protection selon l'une des revendications 1 à 5, caractérisée par le fait que la zone de rigidification (20) et la zone d'impact (10) sont réalisées en tant que pièces produites et reliées l'une à l'autre par co-extrusion.

7. Bande de protection selon l'une des revendications 1 à 6, caractérisée par le fait que la zone de rigidification (20) présente une configuration en forme de coquille à paroi mince et à courbure convexe vers l'extérieur.

8. Bande de protection selon l'une des revendications 1 à 7, caractérisée par le fait qu'un profil creux et souple (31'), à paroi mince et muni d'une surface extérieure plane revêtue ou pouvant être revêtue d'un adhésif, est venu solidairement de moulage sur les régions marginales de la zone d'impact (10) formant une base (30) de la bande.

9. Bande de protection selon la revendication 8, caractérisée par le fait que le profil creux (31') est délimité par des cloisons intermédiaires et externes (33) qui présentent des parois minces et sont coudées à angle aigu et/ou à angle obtus par rapport à la surface externe revêtue de l'adhésif.

10. Bande de protection selon l'une des revendications 1 à 9, caractérisée par le fait que, dans la région marginale formant une base (30) de la bande, la zone de rigidification (20) comporte des bords latéraux (21) cintrés vers l'extérieur et noyés dans la zone d'impact.

## Claims

1. Bumper strip for a motor car body having an impact part (10) comprising a soft or semi-rigid synthetic material insert and a stiffening member (20), stable as to its shape, partly or wholly embedded therein, formed of a thermoplastic synthetic material, and having an adhesive or pressure-sensitive adhesive for the attachment of the bumper strip to the motor car body, arranged on the bumper strip by means of a flexible structure (31, 31'), characterized in that to the synthetic material of the stiffening member (20) is added a filler having a low thermal extensibility comprising glass particles, glass fibres, chalk particles, textile fibres, carbon fibres, aramid fibres or asbestos in such an amount between 10 and 30 percent by weight and/or so orientated that the linear thermal extension coefficient of the stiffening member in the lengthwise direction of the bumper strip is less than about $50 \times 10^{-6}$ $K^{-1}$, and in that the adhesive or pressure-sensitive adhesive is arranged on an outer surface of the synthetic material insert forming the impact part (10).

2. Bumper strip according to claim 1, characterised in that the linear thermal extension coefficient of the stiffening member (20) is less than $40 \times 10^{-6}$ $K^{-1}$.

3. Bumper strip according to claim 1 or claim 2, characterised in that the stiffening member (20) contains polyamide, polypropylene, hard PVC, polyurethane or polyethylene as the thermoplastic synthetic material.

4. Bumper strip according to one of claims 1 to 3, characterised in that the impact part (10) comprises polyurethane, a soft PVC or a soft or semi rigid polymer blend.

5. Bumper strip according to one of claims 1 to 4, characterised in that the stiffening member (20) is formed as an extruded part, a drawn part, a vacuum formed part, a blown part, a foam part or as a part produced by deforming a plate or strip and that the impact part (10) is sprayed, foamed or adhered to the stiffening member (20).

6. Bumper strip according to one of claims 1 to 5, characterised in that the stiffening member (20) and the impact part (10) are formed as coextruded and cojoined parts.

7. Bumper strip according to one of claims 1 to 6, characterised in that the stiffening member (20) is formed as a thin-wall, outwardly convexly curved shell.

8. Bumper strip according to one of claims 1 to 7, characterised in that the edge region of the impact part (10) forming a foot (30) of the strip is formed as a thin-wall flexible hollow profile (31') with a plane outer face on which an adhesive is or can be applied.

9. Bumper strip according to claim 8, characterised in that the hollow profile (31') is bounded by thin-walled, intermediate and outer walls (33) acutely angled and/or obtusely with regard to the adhesive-carrying outer surface.

10. Bumper strip according to one of claims 1 to 9, characterised in that the stiffening member (20) has outwardly bent side edges (21) embedded in the impact part in an edge region forming a foot (30) of the strip.

EP 0 084 629 B2

## Fig. 2

## Fig. 1

1